(19)

Europäisches
Patentamt

European
Patent Office

Office européen
des brevets

(11) **EP 4 571 643 A1**

(12) **EUROPEAN PATENT APPLICATION**

(43) Date of publication:
**18.06.2025 Bulletin 2025/25**

(21) Application number: **24219616.0**

(22) Date of filing: **12.12.2024**

(51) International Patent Classification (IPC):
**G06T 7/20** *(2017.01)* **G06T 7/32** *(2017.01)*
**G06T 7/50** *(2017.01)* **G01C 11/02** *(2006.01)*
**G06T 19/20** *(2011.01)* **A61C 9/00** *(2006.01)*

(52) Cooperative Patent Classification (CPC):
**A61C 9/0053; G06T 7/32; G06T 7/50; G06T 17/00;**
G06T 2207/30036; G06T 2210/08; G06T 2210/41;
H04N 19/597

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 US 202318538000**

(71) Applicant: **Dentsply Sirona Inc.**
**York, PA 17401-2991 (US)**

(72) Inventors:
• **ADAMSON, Anders**
**64625 Bensheim (DE)**
• **SCHNABEL, Ruwen**
**64625 Bensheim (DE)**

(74) Representative: **Taor, Simon Edward William et al**
**Venner Shipley LLP**
**200 Aldersgate**
**London EC1A 4HD (GB)**

(54) **REDUCING BANDWIDTH BY PARTIAL RECONSTRUCTION OF OVERLAPPING DENTAL DEPTH IMAGES**

(57)   Aspects include bandwidth reduction in a dental cloud system. By receiving input data representing multiple depth images, partial reconstruction on overlapping images is performed, generating a composite image with significantly reduced data size relative to the input data. This process involves associative operations on depth images, selecting suitable images based on temporal or spatial adjacency, and preserving weight sums for optimal combination. The reconstructed model is transmitted to a remote server for final reconstruction, minimizing required bandwidth. The system integrates low-resolution depth images for swift user feedback and performs global optimization for long-span accuracy. The disclosed approach improves efficiency in dental imaging by reducing data transmission burdens without compromising model accuracy, offering a streamlined approach for cloud-based dental applications.

EP 4 571 643 A1

## Description

## BACKGROUND

*Technical Field*

The present disclosure generally relates to dental imaging and cloud computing and more particularly to optimizing bandwidth utilization in dental applications through the partial reconstruction of overlapping depth images.

*Description of the Related Art*

In the field of dental imaging, the reconstruction of 3D scan data presents a formidable computational challenge. To capture comprehensive images of the entire jaw, taking into consideration the spatial limitations within a patient's mouth, a compact scanner tip and a camera with a confined measurement volume may be used. Consequently, the process of dental scanning becomes an interactive endeavor, where the scanning system plays a crucial role in providing real-time feedback on the successful acquisition of specific areas.

Within the dental field, achieving a thorough scan involves negotiating the intricacies of the oral cavity and capturing images from various angles to ensure a holistic depiction of the jaw. The demand for precision in acquiring diverse jaw components mandates a scanner tip and camera system adept at navigating the constrained spatial environment. The interactive nature of the scanning process is instrumental in ensuring the completeness of the scan, preventing oversights, and guaranteeing that the collected data is comprehensive enough for accurate reconstruction.

Achieving real-time processing is imperative for certain aspects of the dental 3D scan reconstruction, particularly tasks like the prompt registration of incoming depth images. Real-time capabilities may be crucial for providing operators with timely information about the areas successfully captured, facilitating an interactive and efficient scanning experience.

## SUMMARY

According to an embodiment of the present disclosure, a method is disclosed for bandwidth reduction in dental imaging within a cloud system that includes receiving input data, which encapsulates a multitude of depth images acquired during the scanning process. The method discloses partial reconstruction of overlapping depth images, a technique employed to create a single composite image that significantly reduces the overall data size. This partial reconstruction process is a pivotal step, allowing for substantial size reduction early in the imaging pipeline. Following this, the disclosure seamlessly transmits the partially reconstructed composite image to a remote server, where the server model reconstruction takes place. The emphasis on transmitting only the essential data for reconstruction minimizes the required bandwidth, making the method not only efficient but also crucial for real-time and interactive dental imaging applications in a cloud environment.

In one embodiment, the method may also include receiving the input data, which comprises multiple depth images, from an edge device connected to a dental scanner. The edge device is equipped with a processing unit dedicated to the partial reconstruction of the overlapping depth images. This configuration decentralizes the computational responsibilities, allowing for efficient and real-time processing at the edge of the dental imaging system. By employing an edge device with dedicated processing capabilities, the method optimizes the workflow, addressing computational demands and enhancing the overall efficiency of the bandwidth reduction process within the dental imaging framework.

In one embodiment, the method may also outline a mathematical relationship, stating that the sum of the plurality of overlapping depth images $(i_0+i_1+i_2+i_3)$ is equivalent to the sum of the pairs $(i_0+i_1)$ and $(i_2+i_3)$. This signifies that the reconstruction process incorporates a method where combining certain pairs of overlapping depth images yields the same result as combining all the images together. This associative property enhances the efficiency of the reconstruction, allowing for streamlined computational processes and contributing to the reduction of data size while maintaining the integrity of the imaging information.

In one embodiment, the method may make selection of overlapping depth images for partial reconstruction which is specified to be based on temporal adjacency. The images chosen for the reconstruction process are those acquired at a high frequency in close succession, typically temporally adjacent. This temporal selection strategy aims to utilize the high-frequency nature of the data acquisition, such as capturing images in rapid succession (e.g., 20 images per second). By focusing on temporally adjacent images, the method enhances the efficiency of the partial reconstruction process, leveraging the inherent overlap between consecutive depth images to achieve optimal results. This approach contributes to the overall precision and accuracy of the reconstructed dental model, particularly in scenarios where high-frequency data acquisition is critical, such as in dynamic dental imaging.

Aspects described below include a non-transitory computer-readable storage medium comprising computer-executable instructions that, responsive to execution by a processor, cause a system to perform any one of the described methods.

Aspects described below also include a system with means for performing reducing data transfer by partially reconstructing overlapping dental depth images.

## BRIEF DESCRIPTION OF THE DRAWINGS

Apparatuses for and techniques for reducing data transfer by partially reconstructing overlapping dental depth images are described with reference to the following drawings. The same numbers are used throughout the drawings to reference like features and components: The drawings are of illustrative embodiments. They do not illustrate all embodiments. Other embodiments may be used in addition or instead. Details that may be apparent or unnecessary may be omitted to save space or for more effective illustration. Some embodiments may be practiced with additional components or steps and/or without all the components or steps that are illustrated. When the same numeral appears in different drawings, it refers to the same or like components or steps.

FIG. 1 depicts a flow chart of a method for bandwidth reduction by partial reconstruction in which illustrative embodiments may be implemented.

FIG. 2 depicts a block diagram of a data processing environment in which illustrative embodiments may be implemented.

FIG. 3 depicts a block diagram of a data processing system in which illustrative embodiments may be implemented.

FIG. 4 depicts a block diagram of a dental cloud system for bandwidth reduction by partial reconstruction in which illustrative embodiments may be implemented.

## DETAILED DESCRIPTION

In the following detailed description, numerous specific details are set forth by way of examples to provide a thorough understanding of the relevant teachings. However, it should be apparent that the present teachings may be practiced without such details. In other instances, well-known methods, procedures, components, and/or circuitry have been described at a relatively high level, without detail, to avoid unnecessarily obscuring aspects of the present teachings.

The illustrative embodiments recognize that in the domain of dental imaging, the reconstruction of 3D scan data may pose a significant computational challenge. The need to capture detailed images of the entire jaw, compounded by spatial constraints within the patient's mouth, may cause the use of a compact scanner tip and a camera with limited measurement capabilities. This may lead to dental scanning evolving into an interactive process, where real-time feedback from the scanning system becomes pivotal in confirming the successful acquisition of specific areas. Within the dental field, achieving a comprehensive scan involves navigating the complexities of the oral cavity and capturing images from diverse angles to ensure a holistic representation of the jaw.

The illustrative embodiments further recognize that the reliance on conventional high-resolution scanners for 3D data acquisition may generate substantial data loads, often overwhelming available bandwidth during transmission to remote servers. This may pose significant challenges in terms of latency, hindering the real-time feedback crucial for guiding the scanning process. Offline reconstruction processes, while capable of producing accurate results, may contribute to delays as the acquired data is transmitted and processed remotely. In an environment where interactive scanning is essential, these delays may adversely impact the operator's ability to navigate the scanner precisely within the oral cavity, leading to potential oversights and inefficiencies in the overall scanning procedure.

Even further, the illustrative embodiments recognize that the computational demands associated with current technologies may often burden local devices, limiting their processing capabilities and affecting the efficiency of the dental imaging system.

The illustrative embodiments disclose decentralization of computational capabilities. The cloud emerges as a favorable solution, offering a remote computational environment capable of handling intensive tasks. Further, relocating computational resources to other locations within a dental practice, such as a device situated in a different room within the dental practice, can provide some advantages.

The illustrative embodiments further implement reducing data transfer by partially reconstructing overlapping dental depth images. In example aspects, a method for bandwidth reduction in dental imaging within a cloud system is disclosed that includes receiving input data, which encapsulates a multitude of depth images acquired during the scanning process. The method discloses the partial reconstruction of overlapping depth images, a technique employed to create a single composite image that significantly reduces the overall data size. This partial reconstruction process is a pivotal step, allowing for substantial size reduction early in the imaging pipeline. Following this, the disclosure seamlessly transmits the partially reconstructed composite image to a remote server, where the server model reconstruction takes place. The emphasis on transmitting only the essential data for reconstruction minimizes the required bandwidth, making the method not only efficient but also crucial for real-time and interactive dental imaging applications in a cloud environment.

The illustrative embodiments are described with respect to certain types of machines. The illustrative embodiments are also described with respect to other scenes, subjects, measurements, devices, data processing systems, environments, components, and applications only as examples. Any specific manifestations of these and other similar artifacts are not intended to be limiting to the disclosure. Any suitable manifestation of these and other similar artifacts can be selected within the scope of the illustrative embodiments.

Furthermore, the illustrative embodiments may be implemented with respect to any type of data, data source, or access to a data source over a data network. Any type of data storage device may provide the data to an embodiment of the disclosure, either locally at a data processing system or over a data network, within the scope of the disclosure. Where an embodiment is described using a mobile device, any type of data storage device suitable for use with the mobile device may provide the data to such embodiment, either locally at the mobile device or over a data network, within the scope of the illustrative embodiments.

The illustrative embodiments are described using specific surveys, code, hardware, algorithms, designs, architectures, protocols, layouts, schematics, and tools only as examples and are not limiting to the illustrative embodiments. Furthermore, the illustrative embodiments are described in some instances using particular software, tools, and data processing environments only as an example for the clarity of the description. The illustrative embodiments may be used in conjunction with other comparable or similarly purposed structures, systems, applications, or architectures. For example, other comparable devices, structures, systems, applications, or architectures therefor, may be used in conjunction with such embodiment of the disclosure within the scope of the disclosure. An illustrative embodiment may be implemented in hardware, software, or a combination thereof.

The examples in this disclosure are used only for the clarity of the description and are not limiting to the illustrative embodiments. Additional data, operations, actions, tasks, activities, and manipulations will be conceivable from this disclosure and the same are contemplated within the scope of the illustrative embodiments.

Any advantages listed herein are only examples and are not intended to be limiting to the illustrative embodiments. Additional or different advantages may be realized by specific illustrative embodiments. Furthermore, a particular illustrative embodiment may have some, all, or none of the advantages listed above.

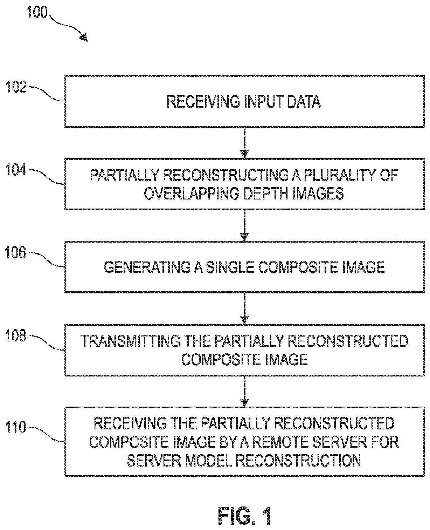

In accordance with an embodiment of the present disclosure, FIG. 1 depicts a flow chart of a method 100 for bandwidth reduction by partial reconstruction in which illustrative embodiments may be implemented. The method commences with the step of receiving input data at block 102. This input data typically consists of a set of depth images, which serve as the foundation for the subsequent reconstruction phases. Moving forward, the method progresses to the partial reconstruction phase at block 104. During this stage, a multitude of overlapping depth images are systematically reconstructed, effectively merging into a single composite image at 106. The amalgamation of these partially reconstructed images results in a cohesive representation that encapsulates the salient features derived from the overlapping depth data. Following the creation of the composite image, the method transitions to the transmission phase at 108. The partially reconstructed composite image is sent to its destination, typically a remote server, leveraging data transmission protocols to optimize the bandwidth utilization.

Subsequently, at 110, the transmitted partially reconstructed composite image is received by the designated remote server, marking the initiation of the server-side model reconstruction. This server model reconstruction involves further refining the partially reconstructed data, executing additional processing steps to culminate in the creation of a final, highly accurate 3D model.

In the context of the described method for bandwidth reduction through partial reconstruction, the term "plurality of depth images" refers to a set or collection of multiple individual depth images. Each depth image represents a snapshot of a scene or object captured from a particular perspective, emphasizing the spatial information of objects within the imaged environment. The depth images may be range images wherein a pixel thereof gives the distance to the observed surface along a viewing ray. In an aspect herein, the partial reconstruction may not only process depth images but may also additionally process color images in order to compute a colored/textured partially reconstructed model.

These depth images are typically obtained using a 3D imaging system, such as a depth camera or a 3D scanner, and each image in the set contributes unique spatial information about the scene or object. The overlapping nature of these images may allow for subsequent merging or fusion during the partial reconstruction process. By utilizing multiple depth images that cover similar regions, the method can leverage their collective information to enhance accuracy, reduce noise, and create a more comprehensive and detailed representation in the final composite image.

In the described process, the input data is generally received by a specific hardware component known as an "edge device," which is connected to a dental scanner. An edge device, in this context, serves as an intermediary device positioned at the edge or periphery of the network, typically closer to the data source or the point of data acquisition, which is the dental scanner in this case.

The edge device may act as a conduit for receiving data directly from the dental scanner, which could include a stream of depth images captured during the scanning process. The connection between the edge device and the dental scanner facilitates the seamless transfer of this data. Further, the edge device may be a part of the dental scanner in some cases.

The edge device may be equipped with a processing unit dedicated to the partial reconstruction of the plurality of overlapping depth images. This processing unit may carry out the computational tasks associated with merging and reconstructing the overlapping depth images into a cohesive representation. It may be responsible for executing the algorithms and computations needed for this partial reconstruction step.

In essence, the edge device acts as a localized processing hub, handling preliminary computations on-site before transmitting the partially reconstructed data to a remote server or cloud environment. This decentralized approach aids in optimizing bandwidth usage and response times, as the computational load is distributed between the edge device and the more powerful resources available on the server side.

In an embodiment, the partial reconstruction phase employs a set of associative operations on a collection of overlapping depth images. The term "associative operations" indicates that the order in which the operations are performed does not impact the final result. Specifically, the mathematical property of associativity is applied to the sum of these depth images.

The expression $(i_0+i_1+i_2+i_3)$ represents the sum of four overlapping depth images denoted as $i_0$, $i_1$, $i_2$, and is. According to the associative property, this sum is equivalent to the sum of two pairs: $(i_0+i_1)$ and $(i_2+i_3)$. Mathematically, this can be expressed as:

$$(i_0+i_1+i_2+i_3) = (i_0+i_1) + (i_2+i_3)$$

In simpler terms, the order in which the depth images are added together doesn't matter. The total sum can be achieved by first adding $i_0$ and $i_1$, and then adding the result to the sum of $i_2$ and $i_3$.

This application of associativity may ensure that the merging of overlapping depth images during partial reconstruction is consistent and reliable, regardless of the specific sequence in which the depth images are processed. It contributes to the accuracy and stability of the reconstructed model, providing a robust foundation for subsequent stages in the imaging process.

Focusing on the final reconstruction on the server side, the process initiates with volume integration, wherein the information from the partial reconstructions is amalgamated, taking into account the accumulated weights assigned during the earlier stages. This weight consideration ensures a nuanced synthesis of the volumetric data. Subsequently, the method progresses to extracting meshes, transforming the volumetric implicit information into an explicit geometric representation (e.g. triangle mesh). Remeshing is then employed to optimize the mesh structure for computational efficiency and geometric accuracy. Particularly, to preserve details that may be lost during volume integration, an "active shape" computation may be implemented, strategically retaining critical information. Lastly, a final texture atlas may be generated, incorporating texture information from the partial reconstructions. This comprehensive approach may enable the server's final reconstruction to produce a refined 3D model, combining geometric precision, computational efficiency, and visual richness for an accurate representation of the scanned dental structures. In an aspect, with regards to the remeshing, a routine may be performed to subdivide the triangles dependent on the (anisotropic) curvature using vertex split. To optimize the triangulation's ability to represent sharp edges edge flipping may be additionally applied. With regards to active shape computation, routine may be performed to solve a (sparse) system of linear equations that finds new vertex locations of the current mesh that are optimally close to the sample points in the vicinity of these vertices. To avoid inconsistencies of the resulting mesh, e.g. flipped triangles, smoothness constraints may be added to the neighborhoods of the vertices.

Additionally, the methodology encompasses a step of global optimization conducted on all depth images and partial reconstructions prior to their respective volume integration processes. This strategic global optimization aims to align the images in their respective positions and thus refine and enhance the accuracy of the reconstructed models across an extended span, ensuring optimal precision and coherence throughout the entirety of the scanned area. By addressing potential discrepancies and errors accumulated during the reconstructions, this preemptive global optimization contributes to achieving a high level of accuracy and fidelity in the final 3D model, particularly in scenarios where imaging spans a broad spatial context, such as capturing extensive dental structures.

In an embodiment, the edge device and the remote server are each equipped with dedicated reconstruction modules designed to execute a comprehensive set of tasks during server model reconstruction. The modules conduct volume integration on the depth images in the partial reconstruction process on the edge device or on the partially reconstructed models in the final reconstruction process in the remote server, meticulously considering the accumulated weights to ensure a nuanced synthesis of the volumetric data. Subsequent operations involve the extraction of meshes to create a geometric representation, remeshing to optimize mesh structure, and the active shape computation to strategically retain information lost during volume integration on the edge device and the remote server respectively. Additionally, the modules generate a texture for the partial reconstruction in the edge device for transmission and a final texture atlas, for the remote server, incorporating texture information from the partial reconstructions. This orchestrated series of operations on edge device and the server side ensures the production of a refined and accurate 3D model, combining geometric precision and visual richness in the representation of the scanned dental structures. Thus, in as aspect, combining scans acquired within a period (e.g., 10-20 depth images) and preserving the weight sums for proper combination in the final reconstruction step may allow for relatively low error accumulation and further allow for global optimization before the final reconstruction, though global optimization may also be performed on the depth images before partial reconstruction. In the partial reconstruction one may: (i) Volume integrate several depth images into a voxel grid containing signed implicit distances to the surface and weights, (ii) Extract meshes using marching cubes, (iii) Perform remeshing, (iv) Perform an active shape computation to preserve sharp edges, and (v) Compute textures for the triangles (e.g. 1d texture streams per triangle). All the obtained partial reconstructions may be rendered on the server side. To maintain fast user feedback, one may immediately send low resolution versions of the depth images which are discarded after receiving a partial reconstruction to temporary visualization. Further, one may perform global optimization on all partial reconstruction for optimal long span accuracy before final reconstruction. For the final reconstruction one may: (i) Volume integrate the partial reconstructions (as above) considering the weights accumulated during the partial reconstruction process, (ii) Extract the mesh (iii) Perform remeshing, (iv) Perform an active shape computation to preserve sharp edges, and (v) Compute a final texture atlas from the texture information of the partial reconstructions as described herein.

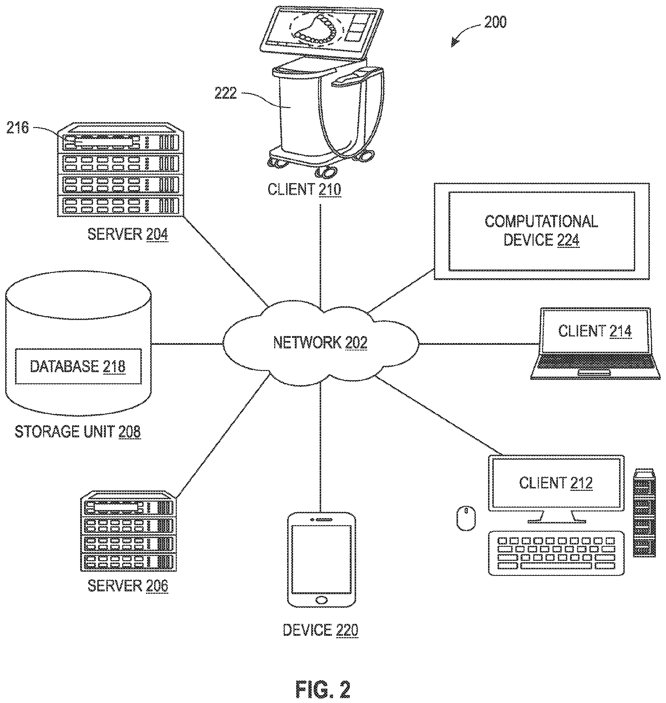

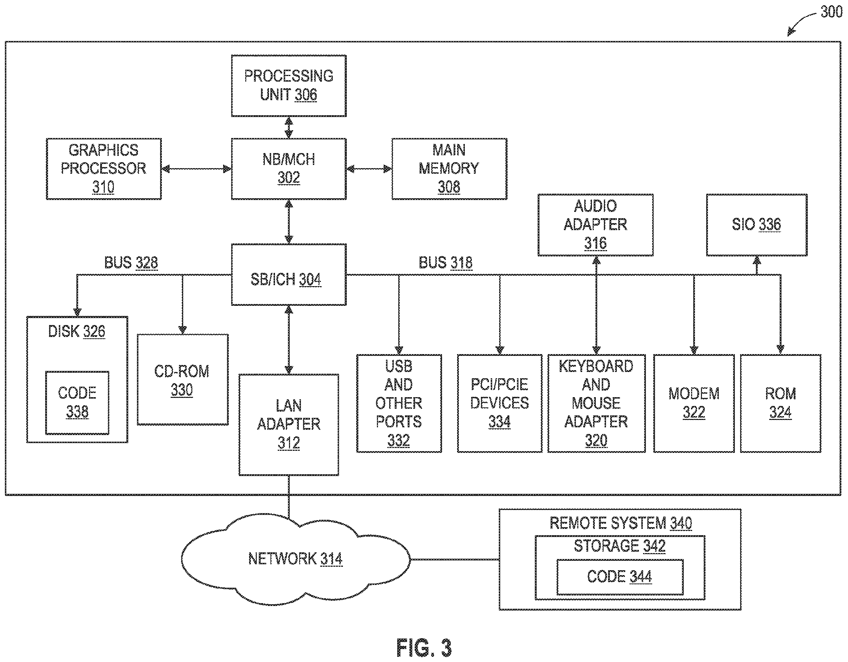

With reference to the figures and in particular, with reference to FIG. 2 and FIG. 3, these figures are example diagrams of data processing environments in which illustrative embodiments may be implemented. FIG. 2 and FIG. 3 are only examples and are not intended to assert or imply any limitation with regard to the environments in which different embodiments may be implemented. A particular implementation may make many modifications to the depicted environments based on the following description.

FIG. 2 depicts a block diagram of a network of data processing systems in which illustrative embodiments may be implemented. Data processing environment 200 is a network of computers in which the illustrative embodiments may be implemented. Data processing environment 200 includes network 202. Network 202 is the medium used to provide communications links between various devices and computers connected together within the data processing environment 200. Network 202 may include connections, such as wire, wireless communication links, or fiber optic cables.

Clients or servers are only example roles of certain data processing systems connected to network 202 and are not intended to exclude other configurations or roles for these data processing systems. Server 204 and server 206 couple to network 202 along with storage unit 208. Software applications may execute on any computer in data processing environment 200. Client 210, client 212, and client 214 are also coupled to network 202. A data processing system, such as server 204 or server 206, or clients (client 210, client 212, client 214) may contain data and may have software applications or software tools executing thereon. Server 204 may include one or more GPUs (graphics processing units) for training one or more models.

Only as an example, and without implying any limitation to such architecture, FIG. 2 depicts certain components that are usable in an example implementation of an embodiment. For example, servers and clients are only examples and not to imply a limitation to a client-server architecture. As another example, an embodiment can be distributed across several data processing systems and a data network as shown, whereas another embodiment can be implemented on a single data processing system within the scope of the illustrative embodiments. Data processing systems (server 204, server 206, client 210, client 212, client 214) also represent example nodes in a cluster, partitions, and other configurations suitable for implementing an embodiment.

Device 220 is an example of a device described herein. For example, device 220 can take the form of a smartphone, a special purpose fabrication platform, a tablet computer, a laptop computer, client 210 in a stationary or a portable form, a wearable computing device, or any other suitable device. Any software application described as executing in another data processing system in FIG. 2 can be configured to execute in device 220 in a similar manner. Any data or information stored or produced in another data processing system in FIG. 2 can be configured to be stored or produced in device 220 in a similar manner.

A computational device 224 may execute as part of client application 222, server application 216, or on any data processing system herein. The computational device 224 may also execute as a cloud service communicatively coupled to system services, hardware resources, or software elements described herein. Database 218 of storage unit 208 stores one or more data in repositories for computations herein. The computational device 224 may perform the method comprising: receiving input data representing a plurality of depth images, partially reconstructing a plurality of overlapping depth images to generate a single composite image with reduced data size relative to the input data, and transmitting the partially reconstructed composite image to a remote server for server model reconstruction.

Server application 216 implements an embodiment described herein. Server application 216 can use data from storage unit 208 for reducing data transfer by partially reconstructing overlapping dental depth images. Server application 216 can also obtain data from any client for computations. Server application 216 can also execute in any of data processing systems (server 204 or server 206, client 210, client 212, client 214), such as client application 222 in client 210, and need not execute in the same system as server 204.

Server 204, server 206, storage unit 208, client 210, client 212, client 214, and device 220 may couple to network 202 using wired connections, wireless communication protocols, or other suitable data connectivity. Client 210, client 212, and client 214 may be, for example, personal computers or network computers.

In the depicted example, server 204 may provide data, such as boot files, operating system images, and applications to client 210, client 212, and client 214. Client 210, client 212, and client 214 may be clients to server 204 in this example. Client 210, client 212, and client 214 or some combination thereof, may include their own data, boot files, operating system images, and applications. Data processing environment 200 may include additional servers, clients, and other devices that are not shown. Server 204 includes a server application 216 that may be configured to implement one or more of the functions described herein in accordance with one or more embodiments.

The data processing environment 200 may also be the Internet. Network 202 may represent a collection of networks and gateways that use the Transmission Control Protocol/Internet Protocol (TCP/IP) and other protocols to communicate with one another. At the heart of the Internet is a backbone of data communication links between major nodes or host computers, including thousands of commercial, governmental, educational, and other computer systems that route data and messages. Of course, data processing environment 200 also may be implemented as a number of different types of networks, such as for example, an intranet, a local area network (LAN), or a wide area network (WAN). FIG. 2 is intended as an example, and not as an architectural limitation for the different illustrative embodiments.

Among other uses, data processing environment 200 may be used for implementing a client-server environment in which the illustrative embodiments may be implemented. A client-server environment enables software applications and data to be distributed across a network such that an application functions by using the interactivity between a client data processing system and a server data processing system. Data processing environment 200 may also employ a service-oriented architecture where interoperable software components distributed across a network may be packaged together as coherent business applications. Data processing environment 200 may also take the form of a cloud and employ a cloud computing model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service.

With reference to FIG. 3, this figure depicts a block diagram of a data processing system in which illustrative embodiments may be implemented. Data processing system 300 is an example of a computer, such as server 204, server 206, or client 210, client 212, client 214, the computational device 224 in FIG. 2, or another type of device in which computer-usable program code or instructions implementing the processes may be located for the illustrative embodiments.

Data processing system 300 is also representative of a data processing system or a configuration therein, such as device 220 in FIG. 2 in which computer-usable program code or instructions implementing the processes of the illustrative embodiments may be located. Data processing system 300 is described as a computer only as an example, without being limited thereto. Implementations in the form of other devices, such as device 220 in FIG. 2, may modify data processing system 300, such as by adding a touch interface, and even eliminate certain depicted components from data processing system 300 without departing from the general description of the operations and functions of data processing system 300 described herein.

In the depicted example, data processing system 300 employs a hub architecture including North Bridge and memory controller hub (NB/MCH) 302 and South Bridge and input/output (I/O) controller hub (SB/ICH) 304. Processing unit 306, main memory 308, and graphics processor 310 are coupled to North Bridge and memory controller hub (NB/MCH) 302. Processing unit 306 may contain one or more processors and may be implemented using one or more heterogeneous processor systems. Processing unit 306 may be a multi-core processor. Graphics processor 310 may be coupled to North Bridge and memory controller hub (NB/MCH) 302 through an accelerated graphics port (AGP) in certain implementations.

In the depicted example, local area network (LAN) adapter 312 is coupled to South Bridge and input/output (I/O) controller hub (SB/ICH) 304. Audio adapter 316, keyboard and mouse adapter 320, modem 322, read only memory (ROM) 324, universal serial bus (USB) and other ports 332, and PCI/PCIe devices 334 are coupled to South Bridge and input/output (I/O) controller hub (SB/ICH) 304 through bus 318. Hard disk drive (HDD) or solid-state drive (SSD) 226a and CD-ROM 330 are coupled to South Bridge and input/output (I/O) controller hub (SB/ICH) 304 through bus 328. PCI/PCIe devices 334 may include, for example, Ethernet adapters, add-in cards, and PC cards for notebook computers. PCI uses a card bus controller, while PCIe does not. Read only memory (ROM) 324 may be, for example, a flash binary input/output system (BIOS). Hard disk drive (HDD) or solid-state drive (SSD) 326 and CD-ROM 330 may use, for example, an integrated drive electronics (IDE), serial advanced technology attachment (SATA) interface, or variants such as external-SATA (eSATA) and micro- SATA (mSATA). A super I/O (SIO) device 336 may be coupled to South Bridge and input/output (I/O) controller hub (SB/ICH) 304 through bus 318.

Memories, such as main memory 308, read-only memory (ROM) 324, or flash memory (not shown), are some examples of computer usable storage devices. Hard disk drive (HDD) or solid-state drive (SSD) 326, CD-ROM 330, and other similarly usable devices are some examples of computer usable storage devices including a computer usable storage medium.

An operating system runs on processing unit 306. The operating system coordinates and provides control of various components within data processing system 300 in FIG. 3. The operating system may be a commercially available operating system for any type of computing platform, including but not limited to server systems, personal computers, and mobile devices. An object-oriented or other type of programming system may operate in conjunction with the operating system and provide calls to the operating system from programs or applications executing on data processing system 300.

Instructions for the operating system, the object-oriented programming system, and applications or programs, such as server application 216 and client application 222 in FIG. 2, are located on storage devices, such as in the form of codes 338 on Hard disk drive (HDD) or solid-state drive (SSD) 326, and may be loaded into at least one of one or more memories, such as main memory 308, for execution by processing unit 306. The processes of the illustrative embodiments may be performed by processing unit 306 using computer-implemented instructions, which may be located in a memory, such as, for example, main memory 308, read-only memory (ROM) 324, or in one or more peripheral devices.

Furthermore, in one case, code 338 may be downloaded over network 314 from remote system 340, where similar code 344 is stored on a storage device 342 in another case, code 338 may be downloaded over network 314 to remote system 340, where downloaded code 344 is stored on a storage device 342.

The hardware in FIG. 2 and FIG. 3 may vary depending on the implementation. Other internal hardware or peripheral devices, such as flash memory, equivalent non-volatile memory, or optical disk drives and the like, may be used in addition to or in place of the hardware depicted in FIG. 2 and FIG. 3. In addition, the processes of the illustrative embodiments may be applied to a multiprocessor data processing system.

In some illustrative examples, data processing system 300 may be a personal digital assistant (PDA), which is generally configured with flash memory to provide non-volatile memory for storing operating system files and/or user-generated data. A bus system may comprise one or more buses, such as a system bus, an I/O bus, and a PCI bus. Of course, the bus system may be implemented using any type of communications fabric or architecture that provides for a transfer of data between different components or devices attached to the fabric or architecture.

A communications unit may include one or more devices used to transmit and receive data, such as a modem or a network adapter. A memory may be, for example, main memory 308 or a cache, such as the cache found in North Bridge and memory controller hub (NB/MCH) 302. A processing unit may include one or more processors or CPUs.

The depicted examples in FIG. 2 and FIG. 3 and above-described examples are not meant to imply architectural limitations. For example, data processing system 300 also may be a tablet computer, laptop computer, or telephone device in addition to taking the form of a mobile or wearable device.

Where a computer or data processing system is described as a virtual machine, a virtual device, or a virtual component, the virtual machine, virtual device, or the virtual component operates in the manner of data processing system 300 using virtualized manifestation of some or all components depicted in data processing system 300. For example, in a virtual machine, virtual device, or virtual component, processing unit 306 is manifested as a virtualized instance of all or some number of hardware processing units 306 available in a host data processing system, main memory 308 is manifested as a virtualized instance of all or some portion of main memory 308 that may be available in the host data processing system, and Hard disk drive (HDD) or solid-state drive (SSD) 326 is manifested as a virtualized instance of all or some portion of Hard disk drive (HDD) or solid-state drive (SSD) 326 that may be available in the host data processing system. The host data processing system in such cases is represented by data processing system 300.

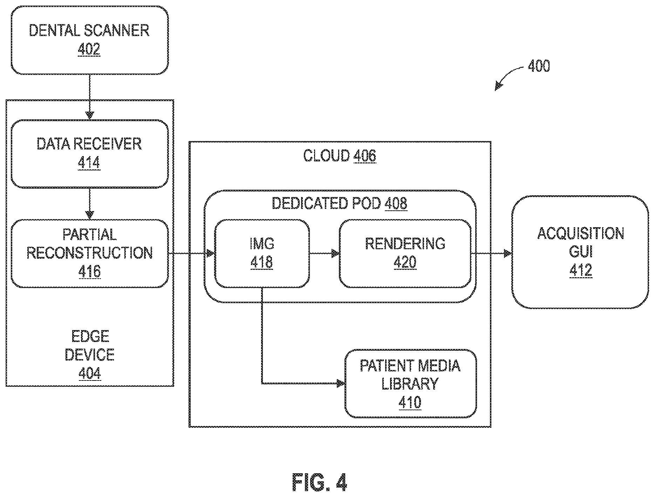

In accordance with an embodiment of the present disclosure, FIG. 4 depicts a block diagram of a dental cloud system 400 for bandwidth reduction by partial reconstruction in which illustrative embodiments may be implemented. The figure illustrates a block diagram of a dental cloud system 400 designed to implement illustrative embodiments for bandwidth reduction through partial reconstruction. The components within the system are interrelated to facilitate a streamlined and efficient workflow. The system shows a dental scanner 402, at the core of the system is the dental scanner 402, responsible for capturing depth images during the scanning process. These images may serve as the input data for the subsequent reconstruction phases. The data receiver 414 is tasked with receiving the depth images from the dental scanner. It acts as an interface between the scanner and the processing components of the system. The partial reconstruction 416, undertakes the task of partially reconstructing the overlapping depth images. It involves associative operations, as described herein, to merge the depth images into a composite representation, significantly reducing data size. More specifically, by partially reconstructing several overlapping (and properly registered) images, a single, slightly larger image may be obtained. Thus, data in the images may be averaged reducing noise and other errors. The resulting partially reconstructed image may be slightly larger than a single input depth image in terms of data size, thus significantly reducing the required bandwidth. A straightforward way to select suitable depth-images for a high-frequency 3D scanner may be to use temporally adjacent (e.g. the 20 images acquired every second or other time period), as they may be highly overlapping. This may allow for subsequent global registration, which may help achieve optimal model accuracy. Alternatively, spatially adjacent images can be selected, e.g. using spatial data structures or clustering methods (such as k-means clustering). Positioned at the edge of the network, the edge device 404 may be equipped with a processing unit dedicated to handling partial reconstruction tasks. It receives data from the dental scanner, performs partial reconstruction including (i) global optimization of the depth data, (ii) volume integration of a plurality of depth images into a voxel grid containing signed implicit distances to the surface and weights, (iii) extraction of triangle meshes using marching cubes, (iv) remeshing involving splitting up large triangle meshes such that final smaller triangles are created at locations with high surface detail and variation and larger triangles are locations with low surface variation, (v) performing an active shape computation to preserve sharp edges of the dental material (e.g. fissures) and (vi) computing textures for the triangles (e.g. 1d texture streams per triangle).

The rendering of the obtained partial reconstructions may be performed on the server side. Further, to maintain fast user feed-back, low resolution versions of the depth images may be provided for viewing purposes and may be discarded after receiving the partial reconstructions.

In an aspect the edge device 404 transmits the partially reconstructed data to the cloud 406. Serving as a central hub for computational resources, the cloud 406 receives the partially reconstructed data from the edge device. The cloud environment is where more resource-intensive tasks, such as final reconstruction and rendering, take place. Dedicated Pod 408 within the cloud is a specialized processing unit or module configured for specific tasks. In this context, it may be optimized for tasks including (i) global optimization of the partially reconstructed volumes, (ii) volume integration of the partial reconstructions considering the weights accumulated during the partial reconstruction process(iii) mesh extraction, (iv) remeshing, (v) active shape computation to preserve sharp edges, and (vi) computing a final texture atlas from the texture information of the partial reconstructions. Image 418 represents the final reconstructed and refined image data. This is the output of the reconstruction process, representing a high-fidelity 3D model of the scanned dental structures. Responsible for creating visual representations from the reconstructed data. Rendering 420 generates images or 3D models that can be visualized for diagnostic purposes or patient communication. A patient media library 410 which is a storage component retains the reconstructed images or models, forming a comprehensive library of patient-specific data for reference or future analysis. Further, Acquisition Graphical User Interface 412 may provide a user-friendly interface for controlling the dental scanner, configuring scanning parameters, and overseeing the acquisition process.

In an embodiment, the proposed method introduces a novel concept of partial reconstruction of specific components of the model before transmission. This methodical reduction of data is not merely a matter of compressing the existing information but involves the reconstruction of integral portions of the model. The disclosure utilizes computational power on the sender side, which can manifest in either a dedicated processing unit embedded within the dental scanner itself, especially when data is transmitted directly to the cloud, or through an on-site computer acting as an edge device. In the latter case, this edge device receives data from the dental camera, whether transmitted wirelessly over WLAN or through a cable, and subsequently relays the information to cloud servers via the internet.

The distinctive feature of this methodology is that the size of the reconstructed model is notably smaller than the input data. This reduction in size is achieved through the partial reconstruction phase, which serves as an intermediate step in the overall process. By strategically reconstructing select components of the model prior to transmission, the method achieves a substantial reduction in data size early on, streamlining the subsequent steps of the imaging pipeline. This strategic reduction not only optimizes the use of computational resources but also sets the stage for efficient data transmission, offering a promising solution to the challenges of bandwidth utilization and real-time responsiveness in dental imaging applications.

In an embodiment, in the context of reconstruction tasks within the realm of dental imaging, the disclosure introduces a fundamental concept of associative operations. This principle encapsulates a property wherein the summation of individual elements, denoted as $i_0$, $i_1$, $i_2$, and $i_3$, is equivalent to the sum of two pairs, namely $(i_0+i_1)$ and $(i_2+i_3)$. Here, the variable 'i' represents a depth-image, although the principle extends to encompass scenarios where 'i' denotes a single 3D model or scan. The plus-operator denotes the reconstruction task at hand.

A concrete example elucidates this concept further: when considering a specific reconstruction task such as volume integration, which involves aggregating sample contributions into voxels (volume elements), the associative property holds. According to this property, the combined effect of integrating four depth images $(i_0+i_1+i_2+i_3)$ is identical to the sum of the integrations of two pairs, i.e., $(i_0+i_1)$ and $(i_2+i_3)$. This associative nature of the reconstruction task maintains consistency and reliability in the imaging process. The example provided with volume integration highlights that as long as proper consideration is given to the associated weights of each element, the addition operation remains associative, ensuring the accuracy and integrity of the reconstruction, particularly in scenarios where volumetric data integration is a pivotal step.

In an embodiment, the disclosed methodology involves the deliberate partial reconstruction of multiple overlapping images, ensuring that they are accurately registered to one another. This concerted effort in registration ensures that the images align correctly, forming a cohesive and comprehensive representation. The amalgamation of these partially reconstructed, registered images results in the creation of a singular, albeit slightly larger, image. This larger image serves as a composite representation that synthesizes information from the overlapping images.

This partial reconstruction approach may mitigate the impact of noise and correct minor errors that may be present in individual images. By averaging the positions across the overlapping images during the reconstruction process, the method strategically reduces the influence of noise and enhances the overall accuracy of the composite image. Importantly, this technique achieves a balance wherein the resulting image is only marginally larger than a single input image in terms of data size. Despite its slight increase in size, this composite image significantly reduces the overall data requirements, presenting a notable advantage in terms of bandwidth efficiency. This reduction in data size is particularly valuable in the context of dental imaging, where the demand for precision and real-time responsiveness is critical, making the inventive approach a promising solution to optimize data transmission in dental cloud systems.

When employing a high-frequency 3D scanner, the conventional and straightforward method of selecting appropriate depth images involves choosing temporally adjacent frames. For instance, selecting images captured at a high rate, such as the 20 images acquired every second, ensures a significant overlap between consecutive frames. This temporal adjacency facilitates subsequent global registration, a critical process often necessary to achieve optimal accuracy in the resulting 3D model. The overlapping nature of temporally adjacent images provides a robust foundation for aligning and combining the captured data, contributing to the refinement of the overall model accuracy.

Alternatively, another viable approach is to opt for spatially adjacent images. In this method, images are selected based on their spatial proximity rather than their temporal sequence. Spatial data structures or clustering methods, such as k-means clustering, can be employed to identify groups of images that are spatially close to each other. This spatially adjacent selection strategy offers an alternative perspective for assembling a set of images for the reconstruction process. The use of spatial data structures or clustering techniques adds a layer of flexibility, enabling the system to organize and select images based on their spatial relationships, providing an alternative pathway to achieving accurate and comprehensive 3D models. The choice between temporal and spatial adjacency depends on the specific requirements of the imaging scenario, allowing for adaptability in the selection process based on the intricacies of the 3D scanning environment.

In an embodiment, the disclosure introduces a novel data transmission process wherein the partially reconstructed models, encompassing all requisite additional information such as color data, are transferred. This strategic transfer ensures that the transmitted data includes not only the geometric details but also any supplementary information deemed necessary for an accurate representation. This may include color attributes or other relevant features. The receiver side, often situated in a cloud environment, then undertakes the final model reconstruction phase.

The final model reconstruction on the receiver side mirrors the partial reconstruction process in several aspects. Both phases involve the integration of depth information and the synthesis of a cohesive model. However, there are differentiating factors in the final reconstruction step. Notably, additional operations come into play, such as mesh simplifications and the generation of a texture atlas. These operations are crucial for refining and optimizing the model, ensuring that it meets specific criteria for accuracy, efficiency, and visual fidelity. The inclusion of mesh simplifications helps manage computational complexity, while the generation of a texture atlas enhances the visual representation of the final model. Together, these operations contribute to the completion of the reconstruction process, providing a comprehensive and refined 3D model on the receiving end.

In an embodiment, the disclosed methodology involves amalgamating the scans obtained within each second, typically ranging between 10 to 20 depth images in this context. During this combination process, the weight sums associated with each depth image are meticulously preserved. These weight sums represent the significance or contribution of each individual image to the overall data set. The preservation of these weight sums is imperative for ensuring a proper combination in the subsequent final reconstruction step.

By combining multiple scans within each second and preserving the associated weight sums, the method leverages the benefits of incremental data acquisition. This approach mitigates the potential for significant error accumulation, as it breaks down the reconstruction process into smaller, more manageable parts. The relatively low error accumulation at this stage is advantageous, paving the way for global optimization before the final reconstruction. This global optimization step becomes feasible due to the reduced errors in the smaller parts, allowing for more accurate adjustments and refinements across the entirety of the data set. The preservation of weight sums throughout the process contributes to the overall accuracy and integrity of the final 3D model, making the inventive approach a robust solution for optimizing the reconstruction of dental imaging data.

In an embodiment, in the partial reconstruction phase, as outlined by the disclosed method and system, several key operations are systematically executed. Initially, the method involves volume integration, wherein information from multiple depth images is fused into a voxel grid. This grid encapsulates signed implicit distances to the surface, representing the spatial relationship of each voxel to the reconstructed surface, along with associated weights. These weights are crucial in determining the contribution of each depth image to the overall reconstruction.

Subsequently, the method employs marching cubes to extract meshes from the volumetric data. Marching cubes is an algorithm that translates the voxelized information into a geometric representation, forming the basis for the subsequent stages. Following this, a remeshing operation is conducted, optimizing the mesh structure for computational efficiency and geometric accuracy. To preserve sharp edges in the reconstructed model, an active shape computation is applied, ensuring that finer details and distinct features are accurately represented.

Finally, the method computes textures for the triangles constituting the meshes. This involves the generation of one-dimensional texture streams per triangle, enhancing the visual fidelity of the reconstructed model. The texture information provides color and surface detail to the model, contributing to its realism and accuracy. Collectively, these operations in the partial reconstruction phase form a comprehensive and meticulous process, culminating in the creation of a refined and detailed 3D model from the input depth images.

The disclosure adopts a rendering strategy where all the partial reconstructions obtained are processed on the server side. This means that the computational burden of rendering, which involves creating visual representations of the reconstructed models, is managed by the servers in the cloud rather than on the local user's device. This centralized rendering approach allows for more efficient utilization of server-side resources, ensuring optimal performance and responsiveness.

To enhance user feedback and maintain a fast interactive experience, a practical optimization is implemented. Low-resolution versions of the depth images are promptly transmitted to the server as soon as they are acquired. This rapid transmission allows for swift initial feedback to the user. However, to conserve bandwidth and streamline the processing pipeline, these low-resolution depth images are only temporarily retained for immediate feedback purposes. Once the server completes the partial reconstruction based on these lower resolution images, the corresponding low-resolution depth images become redundant and are subsequently discarded. This method of quickly transmitting lower resolution data for immediate user feedback, while discarding it after partial reconstruction, strikes a balance between real-time responsiveness and bandwidth efficiency in the overall dental imaging process.

Further, the process incorporates global optimization step, which is applied to all the depth images and partial reconstructions obtained during the imaging procedure. Global optimization refers to the systematic refinement and adjustment of the images or reconstructions to align them with each other with the overarching goal of achieving optimal accuracy across an extended span or range. This optimization process addresses potential discrepancies or errors that may accumulate during the reconstructions, ensuring a coherent and accurate representation of the entire scanned area.

The term "long span accuracy" underscores the significance of maintaining precision and fidelity across a considerable expanse of the reconstructed model. By performing global optimization on all partial reconstructions, the method accounts for the cumulative impact of incremental adjustments, correcting any inconsistencies and enhancing the overall accuracy of the reconstructed model over an extended region. This global optimization step is particularly crucial in scenarios where imaging encompasses a broad spatial context, such as scanning large or intricate dental structures. The method's commitment to achieving optimal long span accuracy underscores its dedication to producing high-quality, detailed, and precise reconstructions across the entirety of the scanned area.

In an embodiment, in the final reconstruction phase, the disclosure unfolds a methodical sequence of operations to refine the previously generated partial reconstructions. Firstly, the method includes volume integration, a process similar to the one employed in partial reconstruction. This step consolidates information from the partial reconstructions, taking into account the accumulated weights assigned during the earlier stages of the reconstruction process. These weights signify the respective contributions of each partial reconstruction to the overall model, ensuring an accurate and weighted synthesis.

Following volume integration, the method proceeds to extract the mesh, transforming the volumetric data into a geometric representation. Subsequent remeshing optimizes the mesh structure for computational efficiency and geometric fidelity. To preserve fine details and sharp edges inherent in the dental structures, an active shape computation is executed. This computation ensures the final model accurately represents intricate features, contributing to the overall realism of the reconstruction.

Finally, the method delves into the realm of texture mapping by computing a final texture atlas including synthesizing texture information from the partial reconstructions to generate a comprehensive texture map that can be applied to the final 3D model. The texture atlas enhances the visual quality of the reconstructed model, providing color and surface detail. In essence, this final reconstruction process, with its intricate series of steps, ensures that the resulting 3D model is not only geometrically accurate but also visually rich and faithful to the original scanned dental structures.

Any specific manifestations of these and other similar example processes are not intended to be limiting to the disclosure. Any suitable manifestation of these and other similar example processes can be selected within the scope of the illustrative embodiments.

Thus, a computer-implemented method, system or apparatus, and computer program product are provided in the illustrative embodiments for reducing data transfer by partially reconstructing overlapping dental depth images and other related features, functions, or operations. Where an embodiment or a portion thereof is described with respect to a type of device, the computer-implemented method, system or apparatus, the computer program product, or a portion thereof, are adapted or configured for use with a suitable and comparable manifestation of that type of device.

Where an embodiment is described as implemented in an application, the delivery of the application in a Software as a Service (SaaS) model is contemplated within the scope of the illustrative embodiments. In a SaaS model, the capability of the application implementing an embodiment is provided to a user by executing the application in a cloud infrastructure. The user can access the application using a variety of client devices through a thin client interface such as a web browser, or other lightweight client-applications. The user does not manage or control the underlying cloud infrastructure including the network, servers, operating systems, or the storage of the cloud infrastructure. In some cases, the user may not even manage or control the capabilities of the SaaS application. In some other cases, the SaaS implementation of the application may permit a possible exception of limited user-specific application configuration settings.

The present disclosure may be a system, a method, and/or a computer program product at any possible technical detail level of integration. The computer program product may include a computer-readable storage medium (or media) having computer-readable program instructions thereon for causing a processor to carry out aspects of the present disclosure.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer-readable program instructions may execute entirely on a dedicated system or user's computer, partly on the user's computer or dedicated system as a stand-alone software package, partly on the user's computer and partly on a remote computer or entirely on the remote computer or server, etc. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

**Claims**

1. A method, comprising:

   receiving input data representing a plurality of depth images;
   partially reconstructing a plurality of overlapping depth images to generate a single composite image with a reduced data size relative to a size of the plurality of overlapping depth images;
   transmitting the partially reconstructed composite image to a remote server for server model reconstruction.

2. The method of claim 1, wherein the input data is received from a dental scanner equipped with a processing unit.

3. The method of claim 1, wherein the input data is received from an edge device connected to a dental scanner, the edge device having a processing unit for partial reconstruction of the plurality of overlapping depth images.

4. The method of any one of claims 1 to 3, wherein the partial reconstruction involves associative operations on the plurality of overlapping depth images.

5. The method of any one of claims 1 to 4, wherein the selection of the plurality of overlapping depth images for partial reconstruction is based on temporally adjacent images acquired at a high frequency; or wherein the selection of the plurality of overlapping depth images for partial reconstruction is based on spatially adjacent images using spatial data structures or clustering methods.

6. The method of any one of claims 1 to 5, further comprising preserving weight sums during the partial reconstruction process for proper combination in the final reconstruction step.

7. The method of any one of claims 1 to 6, wherein the partially reconstructing includes volume integration on the plurality of overlapping depth images, extracting triangle meshes based on marching cubes, performing remeshing using the triangle meshes, applying active shape computation to retain information lost during volume integration, and generating a texture for the triangle meshes.

8. The method of any one of claims 1 to 7, wherein the final reconstruction on the server side involves volume integration on the partially reconstructed composite images with consideration for accumulated weights, extracting triangle meshes from the volume integration, performing remeshing using the triangle meshes, applying active shape computation to retain information lost during the volume integration, and generating a final texture atlas from texture information of the partial reconstructions; and/or

further comprising rendering low-resolution versions of the plurality of overlapping depth images on the server side for fast user feedback, discarding the low-resolution versions after receiving the partial reconstruction; and/or
further comprising performing global optimization on all partial reconstructions for optimal long-span accuracy before volume integration during the final reconstruction step.

9. A dental cloud system for bandwidth reduction by partial reconstruction, comprising:

a dental scanner equipped with a processing unit configured to acquire input data representing a plurality of depth images;
a computational device, located either within the dental scanner or as an edge device connected to the dental scanner, configured to perform partial reconstruction on a plurality of overlapping depth images to generate a single composite image with a reduced data size relative to a size of the plurality of overlapping depth images;
a communication module for transmitting the partially reconstructed composite image to a remote server for server model reconstruction.

10. The system of claim 9, wherein the dental scanner is configured to acquire the plurality of depth images at a high frequency, and the computational device is configured to select temporally adjacent depth images for partial reconstruction; or
wherein the dental scanner is configured to acquire the plurality of depth images, and the computational device is further configured to select spatially adjacent depth images using spatial data structures or clustering methods for partial reconstruction.

11. The system of claim 9 or 10, wherein the computational device is configured to perform associative operations on the plurality of depth images during partial reconstruction.

12. The system of any one of claims 9 to 11, further comprising a rendering module on the server side configured to render low-resolution versions of the plurality of depth images for fast user feedback, wherein the low-resolution versions are discarded after receiving the partial reconstruction; and/or
wherein the computational device is a module adapted to perform partial reconstruction by volume integration on the plurality of overlapping depth images, extract triangle meshes based on marching cubes, perform remeshing using the triangle meshes, apply active shape computation to retain information lost during the volume integration, and generate a texture for the triangle meshes.

13. The system of any one of claims 9 to 12, wherein the remote server comprises a reconstruction module configured to perform volume integration on the partially reconstructed composite images with consideration for accumulated weights, extract triangle meshes from the volume integration, perform remeshing using the triangle meshes, apply active shape computation to retain information lost during the volume integration, and generate a final texture atlas from texture information of the partial reconstructions; and/or
further comprising a global optimization module configured to perform global optimization on all partial reconstructions for optimal long-span accuracy during the final reconstruction on the remote server.

14. The system of any one of claims 9 to 13, wherein the computational device is an edge device connected to the dental scanner, and the communication module is configured to transmit the partially reconstructed composite image to the remote server via the internet; and/or
wherein the dental scanner is equipped with sensors to capture additional information including color, and the computational device is configured to preserve and transmit the additional information along with the partially reconstructed composite image.

15. A computer-readable medium storing instructions that, when executed by a processor in a dental cloud system, cause the system to perform a method for bandwidth reduction by partial reconstruction, the method comprising:

receiving input data representing a plurality of depth images;
partially reconstructing a plurality of overlapping depth images to generate a single composite image with reduced data size relative to a size of the plurality of overlapping depth images;
transmitting the partially reconstructed composite image to a remote server for server model reconstruction.

100

| 102 | RECEIVING INPUT DATA |
|---|---|

↓

| 104 | PARTIALLY RECONSTRUCTING A PLURALITY OF OVERLAPPING DEPTH IMAGES |
|---|---|

↓

| 106 | GENERATING A SINGLE COMPOSITE IMAGE |
|---|---|

↓

| 108 | TRANSMITTING THE PARTIALLY RECONSTRUCTED COMPOSITE IMAGE |
|---|---|

↓

| 110 | RECEIVING THE PARTIALLY RECONSTRUCTED COMPOSITE IMAGE BY A REMOTE SERVER FOR SERVER MODEL RECONSTRUCTION |
|---|---|

FIG. 1

FIG. 2

**FIG. 3**

**FIG. 4**

Europäisches
Patentamt

European
Patent Office

Office européen
des brevets

# EUROPEAN SEARCH REPORT

**Application Number**

EP 24 21 9616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/385721 A1 (KAMARAJU PAVAN K [GB] ET AL) 1 December 2022 (2022-12-01) * paragraphs [0032], [0043], [0045], [0056], [0061], [0035]; figures 2,7 * | 1-8,15 | INV. G06T7/20 G06T7/32 G06T7/50 G01C11/02 |
| X | US 2023/068727 A1 (SAPHIER OFER [IL] ET AL) 2 March 2023 (2023-03-02) * paragraphs [0184], [0195], [0193] * | 1-6,9-14 | G06T19/20 A61C9/00 |
| A | US 2022/103709 A1 (ILIC ALEXANDER [CH] ET AL) 31 March 2022 (2022-03-31) * paragraphs [0044] - [0048], [0052], [0053], [0111] - [0113] * | 1-15 | |
| A | REICHL F ET AL: "Memory-Efficient Interactive Online Reconstruction From Depth Image Streams", CHAPTER 1: MONTE CARLO PATH TRACING, WILEY-BLACKWELL, OXFORD, vol. 35, no. 8, 21 December 2015 (2015-12-21), pages 108-119, XP071488841, DOI: 10.1111/CGF.12779 * the whole document * | 1-15 | **TECHNICAL FIELDS SEARCHED (IPC)** H04N G06T |
| A | JP 6 551623 B1 (RICOH CO LTD) 31 July 2019 (2019-07-31) * paragraphs [0006], [0080], [0087] - [0096], [0120], [0151] - [0159] * | 1-15 | |

-/--

| The present search report has been drawn up for all claims | | |
|---|---|---|
| Place of search | Date of completion of the search | Examiner |
| Munich | 7 April 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 21 9616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Curless Brian ET AL: "A Volumetric Method for Building Complex Models from Range Images", <br> , <br> 1 August 1996 (1996-08-01), pages 303-312, XP093266107, <br> Retrieved from the Internet: <br> URL:https://dl.acm.org/doi/pdf/10.1145/237170.237269 <br> [retrieved on 2025-04-03] <br> * page 1 * <br> ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 7 April 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 571 643 A1**

## ANNEX TO THE EUROPEAN SEARCH REPORT
## ON EUROPEAN PATENT APPLICATION NO.

EP 24 21 9616

07-04-2025

| Patent document cited in search report | Publication date | Patent family member(s) | | Publication date |
|---|---|---|---|---|
| US 2022385721 A1 | 01-12-2022 | US | 2022385721 A1 | 01-12-2022 |
| | | WO | 2022250830 A1 | 01-12-2022 |
| US 2023068727 A1 | 02-03-2023 | CN | 118175973 A | 11-06-2024 |
| | | EP | 4376764 A1 | 05-06-2024 |
| | | US | 2023068727 A1 | 02-03-2023 |
| US 2022103709 A1 | 31-03-2022 | EP | 3143596 A1 | 22-03-2017 |
| | | EP | 3696774 A1 | 19-08-2020 |
| | | US | 2017085733 A1 | 23-03-2017 |
| | | US | 2020162629 A1 | 21-05-2020 |
| | | US | 2022103709 A1 | 31-03-2022 |
| | | WO | 2015173173 A1 | 19-11-2015 |
| JP 6551623 B1 | 31-07-2019 | JP | 6551623 B1 | 31-07-2019 |
| | | JP | 2019164136 A | 26-09-2019 |
| | | JP | 2019164138 A | 26-09-2019 |

EPO FORM P0459